# EUROPEAN PATENT APPLICATION

(11) **EP 4 800 747 A1**
(43) Date of publication of application: **02.09.2026**
(21) Application number: 24884336.9
(22) Date of filing: 29.09.2024
(51) Int. Cl.: H01M 4/02, H01M 4/66, H01M 50/581

(54) **ELECTRODE SHEET, ELECTRODE ASSEMBLY, CELL, BATTERY, AND ELECTRIC DEVICE**

(30) Priority: 30.10.2023 CN 202311426752
(71) Applicant: Contemporary Amperex Technology Co., Limited, Ningde, Fujian 352100 (CN)
(72) Inventor: WU, Kai, Ningde, Fujian 352100 (CN); ZHANG, Yu, Ningde, Fujian 352100 (CN); ZHANG, Zige, Ningde, Fujian 352100 (CN); ZHAO, Zhengyuan, Ningde, Fujian 352100 (CN); ZHANG, Jinsong, Ningde, Fujian 352100 (CN)
(74) Representative: Ziebig Hengelhaupt Intellectual Property Attorneys Patentanwaltskanzlei PartGmbB
(86) International application number: PCT/CN2024/122098
(87) International publication number: WO 2025/092331

(57) **Abstract**

Provided are an electrode sheet, an electrode assembly, a cell, a battery, and an electric device. The electrode sheet comprises a current collector and an active material layer, the current collector comprises a conductive layer; in the thickness direction of the electrode sheet, the active material layer is arranged on at least one side of the conductive layer, the conductive layer has a coated portion; the active material layer is arranged on the coated portion, and the melting point of at least part of the coated portion is less than or equal to 300°C. The melting point of at least partial area of the conductive layer is low, and therefore, when a short circuit occurs at the partial area inside the cell, the part of the conductive layer can be melted to cause an open circuit inside the cell, or the overcurrent capability of the conductive layer can be partially reduced after the partial area is melted, so that the conductive layer can be quickly melted, the active material layer in the short-circuit arca collapses, and a positive electrode and a negative electrode that comprise the electrode sheet are disconnected, thereby effectively alleviating the temperature rise inside the cell, and thus reducing the risk of thermal runaway of the cell comprising the electrode sheet, and improving the reliability of the cell.

## Description

### CROSS-REFERENCE TO RELATED APPLICATIONS

This application claims priority to the Chinese Patent Application No. 202311426752X, filed on October 30, 2023 and entitled "ELECTRODE PLATE, ELECTRODE ASSEMBLY, BATTERY CELL, BATTERY, AND ELECTRIC DEVICE", which is incorporated herein by reference in its entirety.

### TECHNICAL FIELD

This application relates to the technical field of battery technologies, and specifically, to an electrode plate, an electrode assembly, a battery cell, a battery, and an electric device.

### BACKGROUND TECHNIQUE

Due to its outstanding advantages such as high energy density and good cycling performance, storage batteries have become the mainstream product of secondary batteries and are widely used in fields such as portable electrical appliances, electric vehicles, mobile phones, and spacecraft. The reliability of batteries is one of the main concerns for users and also one of the main factors restricting battery development. Therefore, how to improve the reliability of batteries has become an urgent problem to be solved in the battery field.

### SUMMARY OF THE INVENTION

Embodiments of this application provide an electrode plate, an electrode assembly, a battery cell, a battery, and an electric device, so as to improve the reliability of the battery.

According to a first aspect, an embodiment of this application provides an electrode plate including a current collector and an active substance layer. The current collector includes a conductive layer. In a thickness direction of the electrode plate, the active substance layer is provided on at least one side of the conductive layer. The conductive layer has a coating portion, the active substance layer is provided on the coating portion, and a melting point of at least part of the coating portion is less than or equal to 300°C.

In the above technical solution, the melting point of at least part of the coating portion of the conductive layer where the active substance layer is provided is less than or equal to 300°C, that is, the melting point of at least part of the coating portion is low, so that when the inside of the battery cell short-circuits in this part, this part of the conductive layer can fuse in advance to disconnect the inside of the battery cell, or after this part fuses, the current flow capacity of part of the conductive layer can be reduced. In this case, the coating portion can fuse quickly, the active substance layer in the short circuit region collapses, and positive and negative electrodes of the electrode plate are disconnected, thus quickly disconnecting the inside of the battery cell. Therefore, the rise in temperature inside the battery cell can be effectively alleviated, reducing the risk of thermal runaway of the battery cell with the electrode plate, thereby improving the reliability of the battery cell.

In some embodiments of the first aspect of this application, the melting point of at least part of the coating portion is 200°C to 250°C.

In the above technical solution, the melting point of at least part of the coating portion being 200°C to 250°C allows for broader applicable scope of the battery cell with the electrode plate and lower risk of thermal runaway.

In some embodiments of the first aspect of this application, a melting point of any region of the conductive layer is less than or equal to 300°C.

In the above technical solution, the melting point of any region of the conductive layer being less than or equal to 300°C means that the melting point of any region of the conductive layer is low, so that when the inside of the battery cell short-circuits in any region of the conductive layer, the conductive layer can fuse in advance at the short circuit position to disconnect the inside of the battery cell, or after the short circuit region fuses, the current flow capacity of part of the conductive layer can be reduced. In this case, the conductive layer can fuse quickly, the active substance layer in the short circuit region collapses, and positive and negative electrodes of the electrode plate are disconnected, thus quickly disconnecting the inside of the battery cell. Therefore, the rise in temperature inside the battery cell can be effectively alleviated, reducing the risk of thermal runaway of the battery cell with the electrode plate, thereby improving the reliability of the battery cell.

In some embodiments of the first aspect of this application, the conductive layer further includes a tab portion, the tab portion and the coating portion are arranged in a width direction of the electrode plate, the tab portion is not provided with the active substance layer, and a melting point of the coating portion is less than that of the tab portion.

In the above technical solution, the melting point of the coating portion is less than that of the tab portion, making the coating portion easier to fuse relative to the tab portion, so that when the inside of the battery cell with the electrode plate short-circuits, the conductive layer corresponding to the short circuit region can fuse, the active substance layer in the short circuit region collapses, and positive and negative electrodes of the electrode plate are disconnected. Therefore, the rise in temperature inside the battery cell can be effectively alleviated, reducing the risk of thermal runaway of the battery cell with the electrode plate, thereby improving the reliability of the battery cell.

In some embodiments of the first aspect of this application, the current collector further includes an insulating layer, and in a thickness direction of the insulating layer, the conductive layer is provided on at least one side of the insulating layer.

In the above technical solution, the current collector further includes an insulating layer, and the provision of the insulating layer helps to improve the strength of the current collector. When the thickness of the current collector is fixed, the current collector is provided with the insulating layer. The thickness of the conductive layer of the current collector is small, so when the current collector is pierced, the length of burrs generated at the piercing position of the conductive layer of the current collector is also small, and the risk of the burrs piercing the separator to cause an internal short circuit of the battery cell is low, which is conducive to improving the reliability of the battery cell with the electrode plate.

In some embodiments of the first aspect of this application, the melting point of at least part of the coating portion is less than that of the insulating layer.

In the above technical solution, the melting point of at least part of the coating portion is less than that of the insulating layer, so that the conductive layer is easier to fuse relative to the insulating layer, and when the battery cell with the electrode plate experiences a local internal short circuit, the conductive layer in the short circuit region fuses and the insulating layer may not fuse, reducing other problems that reduce reliability caused by other electrochemical reactions occurring inside the battery cell with the electrode plate due to the melting of the insulating layer, and reducing the risk of the battery cell with the electrode plate being unable to operate normally due to the melting of the insulating layer.

In some embodiments of the first aspect of this application, a melting point of the insulating layer is 120°C to 220°C.

In the above technical solution, the melting point of the insulating layer is 120°C to 220°C, so that the battery cell with the electrode plate has a high operating temperature, helping to control the manufacturing costs of the battery cell.

In some embodiments of the first aspect of this application, in the thickness direction of the electrode plate, the conductive layer is provided on both sides of the insulating layer.

In the above technical solution, the conductive layer is provided on both sides of the insulating layer in the thickness direction of the electrode plate, so that both sides of the current collector in the thickness direction of the electrode plate can be provided with the active substance layer, which is conducive to increasing the energy density of the battery cell with the electrode plate.

In some embodiments of the first aspect of this application, the conductive layer is a metal coating provided on a surface of the insulating layer.

In the above technical solution, the conductive layer is a metal coating provided on the surface of the insulating layer, and it can be understood that the conductive layer being plated on the surface of the insulating layer is convenient for processing.

In some embodiments of the first aspect of this application, the insulating layer is made of at least one of polyethylene terephthalate and polypropylene.

In the above technical solution, polyethylene terephthalate and polypropylene have good insulation performance, heat resistance, and dimensional stability, and the battery cell with the electrode plate formed using such current collector has good reliability. Polyethylene terephthalate and polypropylene have light weight, which helps to reduce the weight of the electrode plate, thereby reducing the weight of the battery cell formed using such electrode plate.

In some embodiments of the first aspect of this application, the conductive layer is made of an alloy.

In the above technical solution, the alloy has a lower melting point relative to any single metal constituting the alloy, so that when an abnormal short circuit occurs inside the battery cell with the electrode plate, the conductive layer in the abnormal short circuit region melts, the active substance layer in the abnormal region collapses, and positive and negative electrodes are disconnected, resulting in disconnection inside the battery cell, thereby improving the reliability of the battery cell.

In some embodiments of the first aspect of this application, the alloy includes one or more of bismuth, lead, tin, cadmium, and zinc.

In the above technical solution, bismuth, lead, tin, and cadmium are used to manufacture fusible alloys, helping to improve the reliability of the battery cell with the electrode plate.

In some embodiments of the first aspect of this application, the conductive layer is made of an antioxidant material with conductivity.

In the above technical solution, the conductive layer being made of an antioxidant material improves the corrosion resistance of the conductive layer.

According to a second aspect, embodiments of this application further provide an electrode assembly, including the electrode plate provided in any embodiment of the first aspect.

In the above technical solution, the melting point of at least part of the coating portion of the electrode plate provided in any embodiment of the first aspect is low, so that when the electrode assembly short-circuits in the region with a low melting point, this part of the conductive layer can fuse in advance to disconnect positive and negative electrodes of the electrode assembly, or after this part fuses, the current flow capacity of part of the conductive layer can be reduced. In this case, the conductive layer can fuse quickly, thus quickly disconnecting the positive and negative electrodes of the electrode assembly. Therefore, the rise in temperature can be effectively alleviated, reducing the risk of thermal runaway of the battery cell with the electrode assembly, thereby improving the reliability of the battery cell.

In some embodiments of the second aspect of this application, the electrode assembly includes two electrode plates provided in any embodiment of the first aspect, and the two electrode plates have opposite polarities.

According to a third aspect, embodiments of this application further provide a battery cell, including the electrode assembly provided in any embodiment of the second aspect.

In the above technical solution, when the electrode assembly provided in any embodiment of the second aspect short-circuits, this part of the conductive layer can fuse in advance to disconnect positive and negative electrodes of the electrode assembly, or after the conductive layer partially fuses, the current flow capacity of part of the conductive layer can be reduced. In this case, the conductive layer can fuse quickly, thus quickly disconnecting the positive and negative electrodes of the electrode assembly. Therefore, the rise in temperature can be effectively alleviated, reducing the risk of thermal runaway of the battery cell with the electrode assembly, thereby improving the reliability of the battery cell.

In some embodiments of the third aspect of this application, the battery cell further includes an adapter, the adapter is electrically connected to the conductive layer, and a melting point of the adapter is greater than that of the conductive layer.

In the above technical solution, the melting point of the conductive layer is less than that of the adapter, making the conductive layer easier to fuse relative to the adapter, so that when the inside of the battery cell short-circuits, the conductive layer corresponding to the short circuit region can fuse, the active substance layer corresponding to the short circuit region collapses, and positive and negative electrodes of the battery cell are disconnected, resulting in disconnection inside the battery cell. Therefore, the rise in temperature inside the battery cell can be effectively alleviated, reducing the risk of thermal runaway of the battery cell, thereby improving the reliability of the battery cell.

According to a fourth aspect, embodiments of this application further provide a battery, including the battery cell provided in any embodiment of the third aspect.

In the above technical solution, the battery cell provided in any embodiment of the third aspect has good reliability, and thus the reliability of the battery with the battery cell is also good.

According to a fifth aspect, embodiments of this application further provide an electric device, including the battery provided in any embodiment of the fourth aspect.

In the above technical solution, the battery provided in the embodiments of the fourth aspect has good reliability, which is conducive to improving the power reliability of the electric device powered by the battery.

### BRIEF DESCRIPTION OF DRAWINGS

To describe the technical solutions in the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is a schematic structural diagram of a battery according to some embodiments of this application;
FIG. 4 is a schematic structural diagram of an electrode plate according to some embodiments of this application;
FIG. 5 is a schematic structural diagram of an electrode plate according to some other embodiments of this application;
FIG. 6 is a schematic diagram of a sharp object conductively connecting two electrode plates with opposite polarities according to some embodiments of this application;
FIG. 7 is a schematic diagram of a sharp object conductively connecting two electrode plates with opposite polarities according to some other embodiments of this application;
FIG. 8 is a schematic structural diagram of an electrode plate according to yet some other embodiments of this application;
FIG. 9 is a schematic structural diagram of an electrode plate according to still some other embodiments of this application; and
FIG. 10 is a schematic structural diagram of an electrode plate according to still some other embodiments of this application.

Reference signs: 1000. vehicle; 100. battery; 10. box; 11. first portion; 12. second portion; 20. battery cell; 21. housing; 211. end cover; 212. housing body; 213. electrode terminal; 22. electrode assembly; 221. electrode plate; 221a. positive electrode plate; 221b. negative electrode plate; 2211. tab; 2212. current collector; 22121. conductive layer; 221211. coating portion; 221212. tab portion; 2213. active substance layer; 22122. insulating layer; 222. separator; 200. controller; 300. motor; X. thickness direction of electrode plate; Y. width direction of electrode plate; and 2000. sharp object.

### DESCRIPTION OF EMBODIMENTS

To make the objectives, technical solutions, and advantages in the embodiments of this application clearer, the following clearly and completely describes the technical solutions in the embodiments of this application with reference to the accompanying drawings in the embodiments of this application. Apparently, the described embodiments are some but not all of the embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by persons of ordinary skill in the art based on the embodiments of this application without creative efforts shall fall within the protection scope of this application.

It should be noted that in absence of conflicts, the embodiments and features in the embodiments in this application may be combined with each other.

It should be noted that similar reference signs and letters indicate similar items in the following drawings, and therefore once an item is defined in one drawing, it does not need to be further defined or explained in the subsequent drawings.

Currently, from a perspective of the market development, traction batteries have been increasingly widely used. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, market demands for traction batteries are also increasing.

The battery mentioned in the embodiments of this application is a single physical module that includes one or more battery cells for providing higher voltage and capacity. For example, the battery mentioned in this application may include a battery module, a battery pack, or the like. A battery typically includes a box configured to enclose one or more battery cells. The box can prevent fluid or other foreign matter from affecting charging or discharging of the battery cell.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically categorized into three types depending on their packaging: cylindrical battery cell, prismatic battery cell, and pouch battery cell. This is not limited in the embodiments of this application either.

The battery cell includes a housing and an electrode assembly. The electrode assembly is accommodated in the housing. The electrode assembly is composed of a separator and two electrode plates with opposite polarities. The two electrode plates with opposite polarities are a positive electrode plate and a negative electrode plate respectively. The battery cell mainly relies on migration of metal ions between the positive electrode plate and the negative electrode plate to work. The electrode plate includes a current collector and an active substance layer, and the active substance layer is coated on the surface of the current collector.

During cycling of the battery cell, the battery cell may short circuit due to contact between the positive and negative electrodes. After the short circuit occurs, if the circuit is not disconnected in a timely manner, when the battery cell short-circuits, the battery cell will continuously generates heat, and the temperature is high enough to melt ordinary metals. If the heat cannot be dissipated in a timely manner, it will burn the electric appliance, and may also cause fire or even explosion, resulting in serious property and life losses.

The short circuit of the battery cell is divided into external short circuit and internal short circuit. The external short circuit generally refers to the short circuit caused by direct contact between the positive and negative electrodes, and can generally be achieved by providing a fusing portion on an adapter connected to a positive tab and/or negative tab. When the current flowing through the adapter exceeds the current flow capacity of the fusing portion, the fusing portion fuses to disconnect the positive and negative electrodes of the battery cell, thereby disconnecting the circuit to avoid continuous heat generation of the battery cell. After the external disconnection is achieved, the battery cell is generally scrapped.

The internal short circuit refers to the short circuit in the region inside the battery affected by external objects when the battery cell is punctured by a sharp object or subjected to collision or extrusion. The internal short circuit generally is a local short circuit, and only the temperature in the local region continues to rise. If the internal disconnection is not achieved in a timely manner, the temperature in the local region continues to rise and will gradually spread throughout the entire inside of the battery cell, which will also burn the electric appliance, cause fire or even explosion, and result in serious property and life losses, deteriorating the reliability of the battery cell. However, the fusing portion designed for external disconnection cannot achieve internal disconnection during internal short circuit.

Based on the above considerations, to resolve the reliability problems brought by the internal short circuit of the battery cell, embodiments of this application provide an electrode plate. The electrode plate includes a current collector and an active substance layer. The current collector includes a conductive layer. In a thickness direction of the electrode plate, the active substance layer is provided on at least one side of the conductive layer. The conductive layer has a coating portion, the active substance layer is provided on the coating portion, and a melting point of at least part of the coating portion is less than or equal to 300°C.

The melting point of at least part of the coating portion of the conductive layer where the active substance layer is provided is less than or equal to 300°C, that is, the melting point of at least part of the conductive layer is low, so that when the inside of the battery cell short-circuits in this part, this part of the conductive layer can fuse in advance to disconnect the inside of the battery cell, or after this part fuses, the current flow capacity of part of the conductive layer can be reduced. In this case, the conductive layer can fuse quickly, the active substance layer in the short circuit region collapses, and positive and negative electrodes of the electrode plate are disconnected, thus quickly disconnecting the inside of the battery cell. Therefore, the rise in temperature inside the battery cell can be effectively alleviated, reducing the risk of thermal runaway of the battery cell with the electrode plate, thereby improving the reliability of the battery cell.

The current collector disclosed in the embodiments of this application can be used to manufacture electrode plates and battery cells. The battery cell with the electrode plate provided in the embodiments of this application may be used without limitation in electric devices such as vehicles, ships, or aircrafts. The battery cell, battery, and the like, formed using the electrode plate disclosed in this application can be used to constitute a power supply system of such electric device, which helps to resolve the reliability problems brought by the internal short circuit of the battery cell, improving the reliability of the battery cell and battery.

An embodiment of this application provides an electric device that uses a battery as a power source. The electric device may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

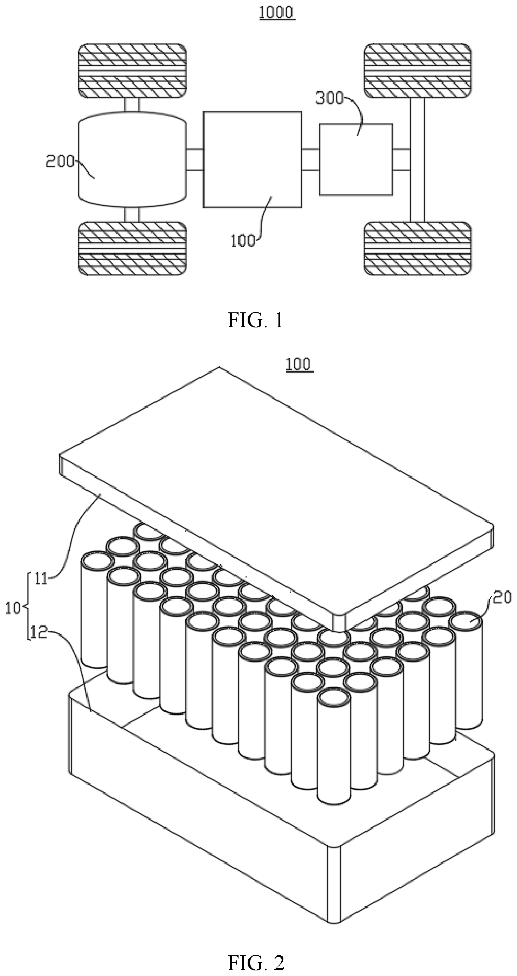

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together to jointly define an accommodating space for accommodating the battery cell 20. The second portion 12 may be a hollow structure with an opening at one end, the first portion 11 may be a plate-shaped structure, and the first portion 11 covers the opening side of the second portion 12 so that the first portion 11 and the second portion 12 jointly define the accommodating space. Alternatively, both the first portion 11 and the second portion 12 may be hollow structures with an opening at one side, and the opening side of the first portion 11 is engaged with the opening side of the second portion 12. Certainly, the box 10 formed by the first portion 11 and the second portion 12 may be of various shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

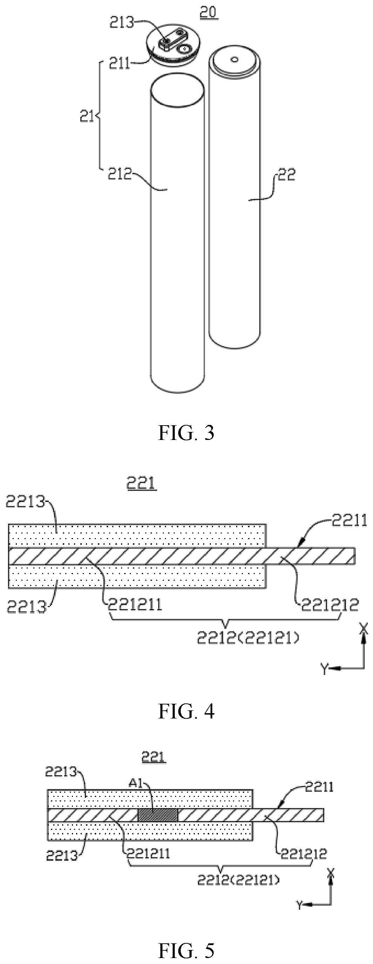

Referring to FIG. 3, FIG. 3 is a schematic structural exploded view of a battery cell 20 according to some embodiments of this application. The battery cell 20 is a smallest element constituting the battery 100. As shown in FIG. 3, the battery cell 20 includes a housing 21, an electrode assembly 22, and other functional components. The electrode assembly 22 is accommodated in the housing 21.

The housing 21 includes an end cover 211 and a housing body 212. The end cover 211 is a component that covers an opening of the housing body 212 to isolate an internal environment of the battery cell 20 from an external environment. Without limitation, shape of the end cover 211 may be adapted to shape of the housing body 212 to fit the housing body 212. Optionally, the end cover 211 may be made of a material with certain hardness and strength (for example, aluminum alloy), so that the end cover 211 is less likely to deform when subjected to extrusion and collision, allowing the battery cell 20 to have higher structural strength and enhanced reliability. Functional components such as an electrode terminal 213 may be provided on the end cover 211. The electrode terminal 213 may be configured to be electrically connected to the electrode assembly 22 for outputting or inputting electrical energy of the battery cell 20. In some embodiments, the end cover 211 may be further provided with a pressure relief mechanism for releasing internal pressure when the internal pressure or temperature of the battery cell 20 reaches a threshold. The end cover 211 may also be made of various materials such as copper, iron, aluminum, stainless steel, aluminum alloy, and plastic. In some embodiments, an insulating member may also be provided at an inner side of the end cover 211. The insulating member may be configured to insulate an electrical connection component in the housing body 212 from the end cover 211 to reduce the risk of short circuit. For example, the insulating member may be made of plastic, rubber, or the like.

The housing body 212 is an assembly configured to form an internal environment of the battery cell 20 by fitting with the end cover 211, where the formed internal environment may be used to accommodate the electrode assembly 22, an electrolyte, and other components. The housing body 212 and the end cover 211 may be separate components, an opening may be provided on the housing body 212, and the end cover 211 covers the opening to form the internal environment of the battery cell 20. Without limitation, the end cover 211 and the housing body 212 may alternatively be integrated. Specifically, the end cover 211 and the housing body 212 may form a shared connection surface before other components are disposed inside the housing, and then the housing body 212 is covered with the end cover 211 when the inside of the housing body 212 needs to be enclosed. The housing body 212 may be of various shapes and sizes, such as a rectangular shape, a cylindrical shape, and a hexagonal prism shape. Specifically, the shape of the housing body 212 may be determined according to a specific shape and size of the electrode assembly 22. The housing body 212 may be made of various materials, such as copper, iron, aluminum, stainless steel, aluminum alloy, and plastic.

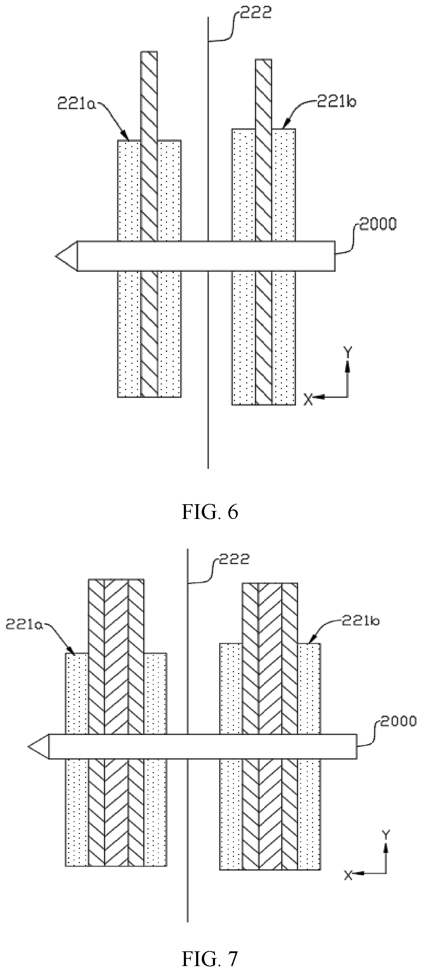

The electrode assembly 22 is a component in which electrochemical reactions take place in the battery cell 20. The housing body 212 may include one or more electrode assemblies 22. The electrode assembly 22 is mainly formed by winding or stacking two electrode plates 221 with opposite polarities, and a separator 222 (shown in FIGs. 5 and 6) is generally provided between the two electrode plates 221 with opposite polarities. The separator 222 may be made of PP (polypropylene, polypropylene), PE (polyethylene, polyethylene), or the like.

Parts of the two electrode plates 221 with opposite polarities that have active substances constitute a body portion of the electrode assembly 22, while parts of the two electrode plates 221 with opposite polarities that have no active substances each constitute a tab 2211, that is, parts of the two electrode plates 221 with opposite polarities that have no active substances constitute a positive tab and a negative tab respectively. The positive tab and the negative tab may both be located at one end of the body portion or be located at two ends of the body portion respectively. During charging and discharging of the battery 100, a positive electrode active substance and a negative electrode active substance react with an electrolyte, and the tabs 2211 are connected to electrode terminals 213 to form a current loop.

As shown in FIGs. 4 and 5, in some embodiments, the electrode plate 221 includes a current collector 2212 and an active substance layer 2213. The current collector 2212 includes a conductive layer 22121, where in a thickness direction X of the electrode plate, the active substance layer 2213 is provided on at least one side of the conductive layer 22121. The conductive layer 22121 has a coating portion 221211, the active substance layer 2213 is provided on the coating portion 221211, and a melting point of at least part of the coating portion 221211 is less than or equal to 300°C.

In the thickness direction X of the electrode plate, the active substance layer 2213 may be provided on only one side or on both sides of the current collector 2212.

Depending on the polarity of the electrode plate 221, the material of the active substance layer 2213 differs. For example, if the electrode plate 221 is a positive electrode plate 221a, the active substance layer 2213 may be lithium cobalt oxide, lithium iron phosphate, ternary lithium, lithium manganate oxide, or the like. If the electrode plate 221 is a negative electrode plate 221b, the active substance layer 2213 may be carbon, silicon, or the like.

In the thickness direction X of the electrode plate, the active substance layer 2213 is provided on one surface of the coating portion 221211 of the conductive layer 22121. In a width direction Y of the electrode plate, the conductive layer 22121 includes the coating portion 221211 and a tab portion 221212, and the tab portion 221212 is connected to one end of the coating portion 221211 in the width direction Y of the electrode plate. The active substance layer 2213 is provided on the surface of the coating portion 221211 in the thickness direction X of the electrode plate, and the tab portion 221212 is not provided with the active substance layer 2213. The tab 2211 of the electrode plate 221 includes the tab portion 221212. The tab portion 221212 is configured to be electrically connected to an adapter (not shown in the figure) to lead out an electrode.

Since the active substance layer 2213 is provided on the coating portion 221211, observed along the thickness direction X of the electrode plate, the region where the conductive layer 22121 overlaps with the active substance layer 2213 is the coating portion 221211, and the melting point of at least part of the coating portion 221211 may be less than or equal to 300°C. The melting point of part of the coating portion 221211 may be less than or equal to 300°C, as shown in FIG. 5, where the melting point of region A1 is less than or equal to 300°C, and the melting point of other regions of the coating portion 221211 except region A1 is greater than 300°C. The melting point of all regions of the coating portion 221211 may also be less than or equal to 300°C, and FIG. 4 shows the situation where the melting point of all regions of the coating portion 221211 is less than or equal to 300°C.

The melting point of at least part of the coating portion 221211 is less than or equal to 300°C, and thus the material of at least part of the coating portion 221211 is a low-melting-point alloy.

In the embodiment where the melting point of part of the coating portion 221211 is less than or equal to 300°C, the material of this part may be a material with a melting point less than or equal to 300°C, and that of other regions of the coating portion 221211 is a material with a melting point greater than 300°C. Alternatively, thickness of this part may be set to be less than that of other regions of the coating portion 221211, so that this part with a smaller thickness can completely melt at a temperature less than or equal to 300°C, and the active substance layer 2213 coated on the region with a smaller thickness loses support and collapses. The coating portion 221211 may be made of pure metal or an alloy.

In the embodiment where the melting point of all regions of the coating portion 221211 is less than or equal to 300°C, the material of the entire coating portion 221211 may be a material with a melting point less than or equal to 300°C. Alternatively, thickness of the coating portion 221211 may be set small enough, so that the short circuit region can completely melt at a temperature less than or equal to 300°C, and the active substance layer 2213 coated on the region with a small thickness loses support and collapses.

Certainly, in some other embodiments, the melting point of at least part of the coating portion 221211 may be less than or equal to 300°C in other ways.

The thickness described in this application refers to the size of the corresponding structure in the thickness direction X of the electrode plate.

The melting point of the coating portion 221211 is the temperature at which the conductive layer 22121 changes from a solid state (melts) to a molten state.

As shown in FIGs. 6 and 7, when the battery cell 20 is punctured by a sharp object 2000, the sharp object 2000 pierces electrode plates 221 with opposite polarities, and the two electrode plates 221 with opposite polarities are conductively connected through the sharp object 2000 to short circuit, forming an internal short circuit in the piercing region of the battery cell 20, which is also a local internal short circuit. Alternatively, in other cases, the battery cell 20 is subjected to collision or extrusion, causing the two electrode plates 221 with opposite polarities of the battery cell 20 to contact, and the two electrode plates 221 with opposite polarities contact to short circuit, that is, an internal short circuit of the battery cell 20 is formed in the contact region. The temperature in the region of the internal short circuit continues to rise. If the melting point of the conductive layer 22121 of the current collector 2212 of the electrode plate 221 in the short circuit region is low, when the temperature rises to the melting point of the conductive layer 22121 in the short circuit region, the conductive layer 22121 corresponding to the short circuit region melts, and the active substance layer 2213 coated on the conductive layer 22121 in the short circuit region loses support and collapses, resulting in disconnection in the short circuit region.

Therefore, the melting point of at least part of the coating portion 221211 is less than or equal to 300°C, that is, the melting point of at least part of the coating portion 221211 is low, so that when the inside of the battery cell 20 short-circuits in this part, this part of the conductive layer 22121 can fuse in advance to disconnect the inside of the battery cell 20, or after this part fuses, the current flow capacity of part of the conductive layer 22121 can be reduced. In this case, the coating portion 221211 can fuse quickly, the active substance layer 2213 in the short circuit region collapses, and positive and negative electrodes of the electrode plate 221 are disconnected, thus quickly disconnecting the inside of the battery cell 20. Therefore, the rise in temperature inside the battery cell 20 can be effectively alleviated, reducing the risk of thermal runaway of the battery cell 20 with the electrode plate 221, thereby improving the reliability of the battery cell 20. Generally, when the temperature of the battery cell 20 exceeds 300°C, thermal runaway occurs, the coating portion 221211 in the internal short circuit region fuses at 300°C, and the active substance layer 2213 in the internal short circuit region collapses, disconnecting the positive and negative electrodes of the electrode plate 221, thus quickly disconnecting the inside of the battery cell 20. In this case, the temperature of the battery cell 20 will not continue to rise, thereby reducing the risk of thermal runaway of the battery cell 20 and improving the reliability of the battery cell 20.

In some embodiments, the melting point of at least part of the coating portion 221211 is 200°C to 250°C.

The melting point of the coating portion 221211 may be 200°C, 210°C, 220°C, 230°C, 240°C, 250°C, or the like. For example, if the material of at least part of the coating portion 221211 is tin, the melting point of tin is 231.89°C.

The melting point of at least part of the coating portion 221211 being 200°C to 250°C allows for broader applicable scope of the battery cell 20 with the electrode plate 221 and lower risk of thermal runaway.

In some embodiments, a melting point of any region of the conductive layer 22121 is less than or equal to 300°C.

The conductive layer 22121 includes the coating portion 221211 and the tab portion 221212, and melting points of the coating portion 221211 and the tab portion 221212 are both less than or equal to 300°C.

The material of the conductive layer 22121 may be a material with a melting point less than or equal to 300°C. The materials of the coating portion 221211 and the tab portion 221212 may be the same or different.

Alternatively, the thickness of the conductive layer 22121 may be set small enough, so that the short circuit region can completely melt at a temperature less than or equal to 300°C, and the active substance layer 2213 in the short circuit region loses support and collapses.

The melting point of any region of the conductive layer 22121 being less than or equal to 300°C means that the melting point of any region of the conductive layer 22121 is low, so that when the inside of the battery cell 20 short-circuits in any region of the conductive layer 22121, the conductive layer 22121 can fuse in advance at the short circuit position to disconnect the inside of the battery cell 20, or after the short circuit region fuses, the current flow capacity of part of the conductive layer 22121 can be reduced. In this case, the conductive layer 22121 can fuse quickly, the active substance layer 2213 in the short circuit region collapses, and positive and negative electrodes of the electrode plate 221 are disconnected, thus quickly disconnecting the inside of the battery cell 20. Therefore, the rise in temperature inside the battery cell 20 can be effectively alleviated, reducing the risk of thermal runaway of the battery cell 20 with the electrode plate 221, thereby improving the reliability of the battery cell 20.

In some other embodiments, the conductive layer 22121 further includes a tab portion 221212, the tab portion 221212 and the coating portion 221211 are arranged in a width direction Y of the electrode plate, the tab portion 221212 is not provided with the active substance layer 2213, and a melting point of the coating portion 221211 is less than that of the tab portion 221212.

The melting point of the coating portion 221211 may be less than that of the tab portion 221212 by using different materials for the coating portion 221211 and the tab portion 221212, that is, the melting point of the material forming the coating portion 221211 is less than that of the material forming the tab portion 221212.

Certainly, in some other embodiments, the melting point of the coating portion 221211 may also be less than that of the tab portion 221212 in other ways.

The melting point of the coating portion 221211 is less than that of the tab portion 221212, making the coating portion 221211 easier to fuse relative to the tab portion 221212, so that when the inside of the battery cell 20 with the electrode plate 221 short-circuits, the conductive layer 22121 corresponding to the short circuit region can fuse, the active substance layer 2213 in the short circuit region collapses, and positive and negative electrodes of the electrode plate 221 are disconnected. Therefore, the rise in temperature inside the battery cell 20 can be effectively alleviated, reducing the risk of thermal runaway of the battery cell 20 with the electrode plate 221, thereby improving the reliability of the battery cell 20.

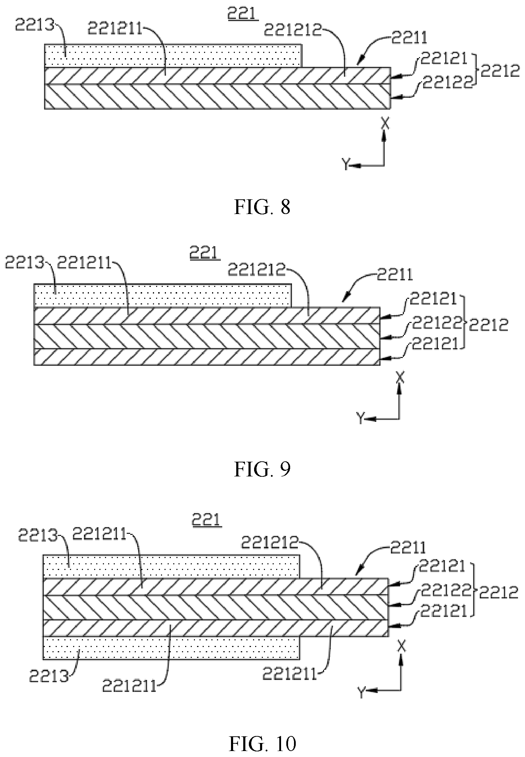

As shown in FIGs. 8 to 10, in some embodiments, the current collector 2212 further includes an insulating layer 22122, and in a thickness direction of the insulating layer 22122, the conductive layer 22121 is provided on at least one side of the insulating layer 22122.

In the thickness direction X of the electrode plate, the conductive layer 22121 may be provided on only one side or on both sides of the insulating layer 22122. The active substance layer 2213 is provided on a side of the conductive layer 22121 facing away from the insulating layer 22122 in the thickness direction X of the electrode plate.

The conductive layer 22121 may be adhered to a surface of the insulating layer 22122 in the thickness direction X of the electrode plate, or provided on a side of the insulating layer 22122 in the thickness direction X of the electrode plate by other connection methods, such as welding connection, magnetron sputtering, vacuum evaporation, electrochemical plating, or water plating, or a combination of methods.

The material of the insulating layer 22122 includes but is not limited to polypropylene, polyethylene, or polyethylene terephthalate.

The current collector 2212 further includes an insulating layer 22122, and the provision of the insulating layer 22122 helps to improve the strength of the current collector 2212. When the thickness of the current collector 2212 is fixed, the current collector 2212 is provided with the insulating layer 22122. The thickness of the conductive layer 22121 of the current collector 2212 is small, so when the current collector 2212 is pierced, the length of burrs generated at the piercing position of the conductive layer 22121 of the current collector 2212 is also small, and the risk of the burrs piercing the separator 222 to cause an internal short circuit of the battery cell 20 is low, which is conducive to improving the reliability of the battery cell 20 with the electrode plate 221.

Certainly, the current collector 2212 may alternatively include only the conductive layer 22121 (as shown in FIG. 4).

In some embodiments, the melting point of at least part of the coating portion 221211 is less than that of the insulating layer 22122.

The conductive layer 22121 may have only a part with a melting point less than that of the insulating layer 22122, or the entire conductive layer 22121 may have a melting point less than that of the insulating layer 22122.

The melting point of at least part of the coating portion 221211 is less than that of the insulating layer 22122, so that the conductive layer 22121 is easier to fuse relative to the insulating layer 22122, and when the battery cell 20 with the electrode plate 221 experiences a local internal short circuit, the conductive layer 22121 in the short circuit region fuses and the insulating layer 22122 may not fuse, reducing other problems that reduce reliability caused by other electrochemical reactions occurring inside the battery cell 20 with the electrode plate 221 due to the melting of the insulating layer 22122, and reducing the risk of the battery cell 20 with the electrode plate 221 being unable to operate normally due to the melting of the insulating layer 22122.

In some embodiments, a melting point of the insulating layer 22122 is 120°C to 220°C.

For example, the melting point of the insulating layer 22122 may be 120°C, 130°C, 140°C, 150°C, 160°C, 170°C, 180°C, 190°C, 200°C, 210°C, 220°C, or the like. For example, if the insulating layer 22122 is made of polyethylene, the melting point of the insulating layer 22122 is 130°C to 145°C, and if the insulating layer 22122 is made of polychlorotrifluoroethylene, the melting point of the insulating layer 22122 is 213°C.

The melting point of the insulating layer 22122 is 120°C to 220°C, so that the battery cell 20 with the electrode plate 221 has a high operating temperature, helping to control the manufacturing costs of the battery cell 20.

In some embodiments, the coating portion 221211 includes a first region with a melting point less than or equal to 300°C, and the melting point of the first region is less than that of the insulating layer 22122.

The region of the coating portion 221211 with a melting point less than or equal to 300°C is defined as the first region. The first region is part of the coating portion 221211. It can be understood that the melting point of part of the coating portion 221211 is not only less than or equal to 300°C but also less than the melting point of the insulating layer 22122. In other words, the melting point of the first region of the coating portion 221211 is not only less than or equal to 300°C but also less than the melting point of the insulating layer 22122.

The melting point of the first region of the coating portion 221211 is less than or equal to 300°C, that is, the melting point of the first region is low. When an internal short circuit occurs in the first region of the battery cell 20 with the electrode plate 221, the first region fuses due to the high temperature generated by the short circuit, thereby disconnecting the circuit. Since the melting point of the first region is less than that of the insulating layer 22122, the insulating layer 22122 will not fuse when the first region fuses. Therefore, the active substance layer 2213 in other regions outside the first region will not collapse, and the battery cell 20 with the electrode plate 221 can still operate normally, forming good reliability of the battery cell 20 with the electrode plate 221, and reducing the risk of the battery cell 20 being scrapped due to internal short circuit.

As shown in FIGs. 8 and 9, in some embodiments, in the thickness direction X of the electrode plate, the conductive layer 22121 is provided on both sides of the insulating layer 22122.

A side of each of two conductive layers 22121 facing away from the insulating layer 22122 may be provided with the active substance layer 2213, or a side of one of the two conductive layers 22121 facing away from the insulating layer 22122 may be provided with the active substance layer 2213.

Each conductive layer 22121 includes the coating portion 221211 and the tab portion 221212, and the tab 2211 of the electrode plate 221 includes the portion of the insulating layer 22122 overlapping with the tab portion 221212 and the tab portions 221212 of the two conductive layers 22121.

The conductive layer 22121 is provided on both sides of the insulating layer 22122 in the thickness direction X of the electrode plate, so that both sides of the current collector 2212 in the thickness direction X of the electrode plate can be provided with the active substance layer 2213, which is conducive to increasing the energy density of the battery cell 20 with the electrode plate 221.

In some embodiments, the conductive layer 22121 is a metal coating provided on a surface of the insulating layer 22122.

It can be understood that the conductive layer 22121 is a metal layer plated on the surface of the insulating layer 22122.

The conductive layer 22121 is a metal coating provided on the surface of the insulating layer 22122, and it can be understood that the conductive layer 22121 being plated on the surface of the insulating layer 22122 is convenient for processing.

In some embodiments, the insulating layer 22122 is made of at least one of polyethylene terephthalate and polypropylene.

The melting point of polyethylene terephthalate is 250°C to 255°C, and the melting point of polypropylene is 164°C to 170°C.

Polyethylene terephthalate and polypropylene have good insulation performance, heat resistance, and dimensional stability, and the battery cell 20 with the electrode plate 221 formed using such current collector 2212 has good reliability. Polyethylene terephthalate and polypropylene have light weight, which helps to reduce the weight of the electrode plate 221, thereby reducing the weight of the battery cell 20 formed using such electrode plate 221.

In some other embodiments, the insulating layer 22122 may alternatively be formed using other materials.

In some embodiments, the conductive layer 22121 is made of an alloy.

An alloy refers to a solid product having metallic properties obtained by mixing and melting one metal with another or several metals or non-metals, followed by cooling and solidifying. The melting point of the alloy is lower than that of any constituent metal in its components.

For example, the weight of the component content is as follows: lead 25% to 32%, tin 12% to 15%, cadmium 9% to 15%, zinc 0% to 4%, antimony 0% to 5%, and bismuth balance. The following preparation method is used: cut each metal raw material with purity above 99.9% into rice grain or mung bean sized small particles; weigh each component raw material in proportion; then melt the alloy, turn on the power switch of the heating melting furnace, put the elements in the melting furnace in proportion for melting, adjust the melting furnace temperature to 400°C to 500°C, stir for 2 minutes to 3 minutes after the elements are heated to 400°C to 500°C, use a spoon to remove the suspended impurities from the surface after the melt is still, then slowly pour the melt into another clean container, and pay attention not to mix the bottom impurities, thereby removing the bottom impurities; repeat stirring and impurity removal 3 to 5 times, and then cast into small pieces to cool. The prepared alloy has a maximum melting temperature of 144°C and a minimum of 41.5°C.

The alloy has a lower melting point relative to any single metal constituting the alloy, so that when an abnormal short circuit occurs inside the battery cell 20 with the electrode plate 221, the conductive layer 22121 in the abnormal short circuit region melts, the active substance layer 2213 in the abnormal region collapses, and positive and negative electrodes are disconnected, resulting in disconnection inside the battery cell 20, thereby improving the reliability of the battery cell 20.

In some other embodiments, the alloy includes one or more of bismuth, lead, tin, cadmium, and zinc.

The alloy may be one of bismuth, lead, tin, cadmium, and zinc mixed and melted with other metals or non-metals, followed by cooling and solidifying to obtain a solid product having metallic properties. The alloy may alternatively be multiple of bismuth, lead, tin, cadmium, and zinc mixed and melted, followed by cooling and solidifying to obtain a solid product having metallic properties. The alloy may alternatively be multiple of bismuth, lead, tin, cadmium, and zinc mixed and melted with other metals or non-metals, followed by cooling and solidifying to obtain a solid product having metallic properties.

For example, the melting point of pure bismuth is 232°C, the melting point of pure lead is 328°C, the melting point of pure tin is 232°C, and the melting point of pure cadmium is 328°C. Bismuth, lead, tin, and cadmium mixed with other metals or non-metals can form alloys with a melting point below 300°C. In some embodiments, the material of at least part of the coating portion 221211 is a bismuth-tin alloy with 58% by weight of bismuth and 42% by weight of tin, and the melting and casting process is as follows: place the well-mixed bismuth-tin alloy material in a melting pot, then heat to about 140°C (temperature measurement can use a semiconductor spot thermometer or ordinary thermometer), and perform casting after uniform melting. After casting, cool for about half an hour. Finally, correct the marks left by casting on the cast, to meet the requirements.

For another example, the material of at least part of the coating portion 221211 may be an alloy formed by 50% by weight of bismuth, 27% by weight of lead, 13% by weight of tin, and 10% by weight of cadmium, with the melting point being 70°C.

For another example, the material of at least part of the coating portion 221211 may be an alloy formed by 52% by weight of bismuth, 40% by weight of lead, and 8% by weight of cadmium, with the melting point being 92°C.

For another example, 20% by weight of bismuth, 20% by weight of lead, and 60% by weight of others (such as mercury) can form an alloy with a melting point of 20°C.
45% by weight of bismuth, 23% by weight of lead, 8% by weight of tin, 5% by weight of cadmium, and 19% by weight of others (such as indium) can form an alloy with a melting point of 47°C.
49% by weight of bismuth, 18% by weight of lead, 12% by weight of tin, and 21% by weight of others (such as indium) can form an alloy with a melting point of 57°C.
50% by weight of bismuth, 27% by weight of lead, 13% by weight of tin, and 10% by weight of cadmium can form an alloy with a melting point of 70°C.
52% by weight of bismuth, 40% by weight of lead, and 8% by weight of cadmium can form an alloy with a melting point of 92°C.
53% by weight of bismuth, 32% by weight of lead, and 15% by weight of tin can form an alloy with a melting point of 96°C.
54% by weight of bismuth, 26% by weight of lead, and 20% by weight of cadmium can form an alloy with a melting point of 103°C.
55.5% by weight of bismuth and 44.5% by weight of lead can form an alloy with a melting point of 124°C.
56% by weight of bismuth, 40% by weight of tin, and 4% by weight of others (such as zinc) can form an alloy with a melting point of 130°C.
29% by weight of bismuth, 43% by weight of lead, and 28% by weight of tin can form an alloy with a melting point of 132°C.
57% by weight of bismuth and 43% by weight of tin can form an alloy with a melting point of 138°C.
32% by weight of lead, 50% by weight of tin, and 18% by weight of cadmium can form an alloy with a melting point of 145°C.
50% by weight of lead and 50% by weight of lead can form an alloy with a melting point of 160°C.
15% by weight of bismuth, 41% by weight of lead, and 44% by weight of tin can form an alloy with a melting point of 164°C.
33% by weight of bismuth and 67% by weight of tin can form an alloy with a melting point of 166°C.
67% by weight of tin and 33% by weight of cadmium can form an alloy with a melting point of 177°C.
38% by weight of lead and 62% by weight of tin can form an alloy with a melting point of 183°C.
20% by weight of bismuth and 80% by weight of tin can form an alloy with a melting point of 200°C.

It should be noted that the preparation method of the alloy can refer to related technologies, which is not described in this application.

According to actual needs, the proportions of bismuth, lead, tin, cadmium, and zinc in the alloy differ. Considering the electrochemical stability and ductility of bismuth, lead, tin, cadmium, and zinc, the weight proportion of each of these metals in the alloy may be less than or equal to 10%. For example, in the embodiment where the alloy includes bismuth, the weight proportion of bismuth may be less than or equal to 10%.

Introducing zinc into the conductive layer 22121 can also reduce the surface density of the conductive layer 22121, thereby helping to increase the energy density of the battery cell 20.

Bismuth, lead, tin, cadmium, and zinc are used to manufacture fusible alloys, helping to improve the reliability of the battery cell 20 with the electrode plate 221.

In some embodiments, the conductive layer 22121 is made of an antioxidant material with conductivity.

In the embodiment where the conductive layer 22121 is made of an alloy, the antioxidant material can serve as one constituent element of the alloy, that is, the conductive layer 22121 is made of any conductive element with good oxidation resistance, such as nickel element, copper element, zinc element, or selenium element. For example, the conductive layer 22121 is a bismuth-tin alloy with 58% by weight of bismuth and 42% by weight of tin.

Certainly, the antioxidant material may alternatively be an antioxidant layer provided on a surface of the conductive material, the antioxidant layer has conductivity, and the conductive material and the antioxidant layer together form the conductive layer 22121. The antioxidant layer may be formed on the surface of the conductive material by methods such as magnetron sputtering, vacuum evaporation, electrochemical plating, or water plating, or a combination of methods.

The antioxidant material includes but is not limited to nickel.

The conductive layer 22121 being made of an antioxidant material with conductivity improves the corrosion resistance of the conductive layer 22121.

In some other embodiments, a passivation process may also be applied to the surface of the conductive layer 22121, by passivating the surface of the conductive layer 22121 with ozone, thereby improving the oxidation resistance and corrosion resistance of the conductive layer 22121.

Embodiments of this application further provide an electrode assembly 22, and the electrode assembly 22 includes the electrode plate 221 provided in the above embodiments.

The electrode assembly 22 includes two electrode plates 221 with opposite polarities, and the electrode plate 221 provided in any of the above embodiments can be used as the positive electrode plate 221a of the electrode assembly 22 or as the negative electrode plate 221b. Both electrode plates 221 with opposite polarities may alternatively use the electrode plate 221 provided in any of the above embodiments.

A melting point of at least part of the coating portion 221211 of the electrode plate 221 provided in any of the above embodiments is low, so that when the electrode assembly 22 short-circuits in the region with a low melting point, this part of the conductive layer 22121 can fuse in advance to disconnect positive and negative electrodes of the electrode assembly 22, or after this part fuses, the current flow capacity of part of the conductive layer 22121 can be reduced. In this case, the conductive layer 22121 can fuse quickly, thus quickly disconnecting the positive and negative electrodes of the electrode assembly 22. Therefore, the rise in temperature can be effectively alleviated, reducing the risk of thermal runaway of the battery cell 20 with the electrode assembly 22, thereby improving the reliability of the battery cell 20.

In some embodiments, the electrode assembly 22 includes two electrode plates 221 provided in any of the above embodiments, and the two electrode plates 221 have opposite polarities.

That is, the positive electrode plate 221a and the negative electrode plate 221b of the electrode assembly 22 both use the electrode plate 221 provided in any of the above embodiments, which can further effectively alleviate the temperature rise, thereby reducing the risk of thermal runaway of the battery cell 20 with the electrode assembly 22 and improving the reliability of the battery cell 20.

Embodiments of this application further provide a battery cell 20, and the battery cell 20 includes the electrode assembly 22 provided in the above embodiments.

When the electrode assembly 22 provided in the above embodiments short-circuits, this part of the conductive layer 22121 can fuse in advance to disconnect positive and negative electrodes of the electrode assembly 22, or after the conductive layer 22121 partially fuses, the current flow capacity of part of the conductive layer 22121 can be reduced. In this case, the conductive layer 22121 can fuse quickly, thus quickly disconnecting the positive and negative electrodes of the electrode assembly 22. Therefore, the rise in temperature can be effectively alleviated, reducing the risk of thermal runaway of the battery cell 20 with the electrode assembly 22, thereby improving the reliability of the battery cell 20.

In some embodiments, the battery cell 20 further includes an adapter, the adapter is electrically connected to the conductive layer 22121, and a melting point of the adapter is greater than that of the conductive layer 22121.

The adapter is configured to be electrically connected to the tab 2211 to lead out the electrode of the battery cell 20, thereby facilitating charging and discharging of the battery cell 20.

The melting point of the conductive layer 22121 is less than that of the adapter, making the conductive layer 22121 easier to fuse relative to the adapter, so that when the inside of the battery cell 20 short-circuits, the conductive layer 22121 corresponding to the short circuit region can fuse, the active substance layer 2213 corresponding to the short circuit region collapses, and positive and negative electrodes of the battery cell 20 are disconnected, resulting in disconnection inside the battery cell 20. Therefore, the rise in temperature inside the battery cell 20 can be effectively alleviated, reducing the risk of thermal runaway of the battery cell 20, thereby improving the reliability of the battery cell 20.

Embodiments of this application further provide a battery 100, and the battery 100 includes the battery cell 20 provided in the above embodiments.

The battery cell 20 provided in the above embodiments has good reliability, and thus the reliability of the battery 100 having the battery cell 20 is also good.

Embodiments of this application further provide an electric device, and the electric device includes the battery 100 provided in the above embodiments.

The battery 100 provided in the above embodiments has good reliability, which is conducive to improving the power reliability of the electric device powered by the battery 100.

Embodiments of this application provide a battery cell 20, the battery cell 20 includes a housing 21 and an electrode assembly 22, the electrode assembly 22 includes two electrode plates 221 with opposite polarities, and the electrode plate 221 includes a current collector 2212 and an active substance layer 2213. The current collector 2212 includes an insulating layer 22122 and two conductive layers 22121, and in a thickness direction X of the electrode plate, the two conductive layers 22121 are provided on two sides of the insulating layer 22122 respectively. The conductive layer 22121 has a coating portion 221211, the active substance layer 2213 is provided on the coating portion 221211, and a melting point of at least part of the coating portion 221211 is less than or equal to 300°C. The conductive layer 22121 is made of an alloy.

The above embodiments are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. An electrode plate, comprising:
a current collector, comprising a conductive layer; and
an active substance layer, wherein in a thickness direction of the electrode plate, the active substance layer is provided on at least one side of the conductive layer;
wherein the conductive layer has a coating portion, the active substance layer is provided on the coating portion, and a melting point of at least part of the coating portion is less than or equal to 300°C.

2. The electrode plate according to claim 1, wherein the melting point of at least part of the coating portion is 200°C to 250°C.

3. The electrode plate according to claim 1, wherein a melting point of any region of the conductive layer is less than or equal to 300°C.

4. The electrode plate according to claim 1, wherein the conductive layer further comprises a tab portion, the tab portion and the coating portion are arranged in a width direction of the electrode plate, the tab portion is not provided with the active substance layer, and a melting point of the coating portion is less than that of the tab portion.

5. The electrode plate according to claim 1, wherein the current collector further comprises an insulating layer, and in a thickness direction of the insulating layer, the conductive layer is provided on at least one side of the insulating layer.

6. The electrode plate according to claim 5, wherein the melting point of at least part of the coating portion is less than that of the insulating layer.

7. The electrode plate according to claim 5, wherein a melting point of the insulating layer is 120°C to 220°C.

8. The electrode plate according to claim 5, wherein in the thickness direction of the electrode plate, the conductive layer is provided on both sides of the insulating layer.

9. The electrode plate according to claim 5, wherein the conductive layer is a metal coating provided on a surface of the insulating layer.

10. The electrode plate according to claim 5, wherein the insulating layer is made of at least one of polyethylene terephthalate and polypropylene.

11. The electrode plate according to any one of claims 1 to 10, wherein the conductive layer is made of an alloy.

12. The electrode plate according to claim 11, wherein the alloy comprises one or more of bismuth, lead, tin, cadmium, and zinc.

13. The electrode plate according to claim 1, wherein the conductive layer is made of an antioxidant material with conductivity.

14. An electrode assembly, comprising the electrode plate according to any one of claims 1 to 13.

15. The electrode assembly according to claim 14, wherein the electrode assembly comprises two electrode plates according to any one of claims 1 to 13, and the two electrode plates have opposite polarities.

16. A battery cell, comprising the electrode assembly according to claim 14 or 15.

17. The battery cell according to claim 16, wherein the battery cell further comprises an adapter, the adapter is electrically connected to the conductive layer, and a melting point of the adapter is greater than that of the conductive layer.

18. A battery, comprising the battery cell according to claim 16 or 17.

19. An electric device, comprising the battery cell according to claim 16 or 17.
